# EUROPEAN PATENT APPLICATION

(11) **EP 4 529 973 A1**
(43) Date of publication of application: **02.04.2025**
(21) Application number: 23200909.2
(22) Date of filing: 29.09.2023
(51) Int. Cl.: B01D 53/04, B01J 20/28

(54) **ADSORBER STRUCTURE AND DEVICE FOR CAPTURING CARBON DIOXIDE, METHOD FOR MANUFACTURING AN ADSORBER STRUCTURE AND USE OF AN ADSORBER STRUCTURE OR DEVICE FOR CAPTURING CARBON DIOXIDE AND METHOD FOR CAPTURING CARBON DIOXIDE**

(71) Applicant: Siemens Energy Global GmbH & Co. KG, 81739 München (DE)
(72) Inventor: Heinze, Christoph, 04416 Markkleeberg (DE); Lempke, Markus, 87509 Immenstadt (DE)

(57) **Abstract**

The invention relates to an adsorber structure (6) for capturing carbon dioxide, in particular for direct air capture of carbon dioxide, comprising at least one adsorber element (7), the at least one adsorber element (7) having at least in sections been additively manufactured, wherein the at least one adsorber element (7) comprises at least one internal gas flow channel (8) for a gas stream to be treated and a sorbent material (9) allowing for adsorption and desorption of carbon dioxide and at least one internal heat fluid channel (10) for indirect heating of the sorbent material (9). Furthermore, the invention relates to a device (1) for capturing carbon dioxide, in particular for direct air capture of carbon dioxide. The invention also relates to a method for manufacturing such an adsorber structure (6), the use of such an adsorber structure (6) or device (1) and a method for capturing carbon dioxide.

## Description

The invention relates to an adsorber structure and a device for capturing carbon dioxide, in particular for direct air capture of carbon dioxide. Furthermore, the invention relates to a method for manufacturing such an adsorber structure, the use of such an adsorber structure or device and a method for capturing carbon dioxide.

There are different applications for the removal of specific components from a gas stream to be treated by use of an adsorption process. One application gaining interest is the removal of carbon dioxide (CO₂) from gas streams. Gas streams to be treated, from which carbon dioxide shall be removed, can for example be industrial exhaust gases or atmospheric air. The latter process is also referred to as direct air capture or short DAC. Direct air capture may be used for obtaining "negative emission" and/or providing carbon dioxide for other processes, like Power-to-X-processes. It may become a key component to achieve or even go beyond "carbon neutrality".

Presently, carbon dioxide capturing processes, in particular direct air capture, often rely on membranes or packed beds with porous granules finally grafted or impregnated amine-based sorbents as adsorber structures for the adsorption process. The adsorber structures sometimes are also referred to as filters since they "capture" the carbon dioxide due to the adsorption. Adsorption in particular means that carbon dioxide is chemically bound by a sorbent material comprised by the adsorber structure.

Subsequent removal of the bound carbon dioxide can be obtained by desorption which usually is thermally or electrically assisted.

The adsorber structures are usually disposed in a vacuum chamber having a gas inlet through which a gas stream to be treated can enter the chamber and a gas outlet through which gas from which at least part of the carbon dioxide has been removed by the adsorption process can leave the chamber.

US 2017/0106330 A1 discloses a device for direct air capture comprising a vacuum chamber and an adsorber structure in form of a dense packed array of laterally spaced apart containers comprising a carrier structure with chemical moieties allowing for adsorption and desorption of carbon dioxide disposed therein.

There are still challenges associated with known carbon dioxide capture devices, one drawback being that the known devices usually can not be easily adapted to flow and pressure drop requirements. Furthermore, lifetime, serviceability, costs and CO₂ capture rates are not yet optimized.

It is an object of the present invention to provide an alternative adsorber structure allowing for more flexibility, in particular regarding the adaption to flow and pressure drop requirements, which at the same time offers good CO₂ capture rates, longevity and can conveniently be manufactured.

For an adsorber structure mentioned at the beginning this object is solved in that the adsorber structure comprises or consist of at least one adsorber element, the at least one adsorber element having at least in sections been additively manufactured, wherein the at least one adsorber element comprises at least one internal gas flow channel for a gas stream to be treated and a sorbent material allowing for adsorption and desorption of carbon dioxide and at least one internal heat fluid channel for indirect heating of the sorbent material.

The basic idea of the present invention in other words is to use at least one additively manufactured structure as a carrier for the sorbent material for binding carbon dioxide. The use of additively manufactured structures on one hand makes it possible to flexibly and conveniently adapt to operational requirements, like flow and pressure drop requirements. At the same time, structures with a high surface to volume ratio providing high CO₂ capture rates can be obtained in comparably simple manner. By additive manufacturing even complexly formed structures with wound or twisted inner walls and channels can be produced.

The use of additive manufacturing makes it also possible to directly provide at least one internal heat fluid channel in the at least one adsorber element in comparably simple manner. The at least one heat fluid channel, in particular at least one inner wall defining, in other words delimiting such, can be additively manufactured when the at least one adsorber element is produced. Subsequent insertion of one or more heat fluid channels after the additive manufacturing process by a material-removing process is no necessary.

The one or more internal heat fluid channels enable indirect heating of the sorbent material, indirect in particular meaning that the heat fluid flowing through the heat fluid channel(s) during a desorption cycle does not come into contact with the sorbent material but remains within the interior of the adsorber structure, in particular within the (respective) adsorber element. Therefore, the ate least one heat fluid channel expediently does not have an interface with gas to be treated passing through the at least one gas flow channel when the adsorber structure is used for capturing carbon dioxide.

A heat fluid may for example be fed to the adsorber element's heat fluid channel(s) from side edge(s) of the adsorber element, while gas to be treated enters the adsorber element(s) on one face side and exits on the other, opposite face side.

The at least one heat fluid channel in particular allows for the usage of waste heat in the desorption cycle. The indirect heating by use of the at least one heat fluid channel can furthermore contribute to increasing the lifetime of the adsorber structure, since the sorbent material does not need to come into contact with a heat fluid, in particular steam/humidity during desorption.

The use of additive manufacturing also allows to directly obtain at least one gas flow channel. Accordingly, the at least one gas flow channel, in particular at least one inner wall defining or in other words delimiting the at least one gas flow channel, expediently has been produced by additive manufacturing and without using any material removing process.

Additive manufacturing includes for example 3D-printing, selective laser or electron beam melting, selective laser or electron beam sintering and the like.

The present invention in conclusion allows to obtain a compact, resources as well as cost efficient, highly performant and durable CO₂ adsorber structure which can be manufactured in comparatively simple manner.

The at least one adsorber element comprises the sorbent material preferably at least on sections of its surface. In particular at least one (inner) wall defining the gas flow channel(s) is equipped with sorbent material, for example coated with sorbent material or a coating material comprising sorbent material.

The at least one adsorber element can be of different shape and dimensions.

The diameter and/or circumference of the at least one adsorber element for example can flexibly be chosen depending on operation requirements, in particular depending on the dimensions and form of a (vacuum) chamber the adsorber structure will be disposed in for performing a carbon dioxide capturing process.

The at least one adsorber element may have a diameter in the range of from 50 cm to 5 m, preferably in the range of from 50 cm to 3 m.

The at least one adsorber element can furthermore have a rectangular or circular circumference. The adsorber element can have a square circumference with four equal sides. Other forms are also possible.

The at least one adsorber element may have a surface to volume ratio in the range of from 300 m⁻¹ to 5000 m⁻¹, preferably in the range of from 500 m⁻¹ to 4000 m⁻¹.

According to a preferred embodiment of the invention, the at least one adsorber element comprises an additively manufactured base element having a surface to volume ratio in the range of from 300 m⁻¹ to 5000 m⁻¹, preferably in the range of from 500 m⁻¹ to 4000 m⁻¹.

The surface to volume ratio of an object, also being referred to as the surface area to volume ratio, in a well known manner is the ratio between the object's surface (area) and volume. If an object for example has a surface (area) of 300 m² and a volume of 1 m³, the surface to volume ratio is 300 m⁻¹.

Preferably the whole base element has been additively manufactured. The base element expediently comprises at least one internal gas flow channel and at least one internal heat fluid channel.

The at least one additively manufactured base element may comprise or consist of metal, ceramic or at least one polymer. Other materials are also possible.

According to another embodiment of the present invention, an adsorber coating is disposed on the base element, the adsorber coating comprising or consisting of the sorbent material. The at least one adsorber element may consist of the base element and an adsorber coating disposed thereon, the adsorber coating comprising one or more layers.

A suitable sorbent material expediently comprises or consist of chemical moieties suitable for CO₂ absorption. The sorbent material may for example comprise or consist of at least one amine. Amines are a class of organic compounds derived from ammonia (NH3) in which one or more hydrogen atoms are replaced by organic groups, in particular alkyl or aryl groups.

The adsorber coating furthermore can comprise or consist of a preferably porous base layer, which in particular has undergone a functionalization treatment, preferably an amine-functionalization treatment. A base layer with porous character can further contribute to a high surface to volume ratio of the adsorber element(s).

Alternatively or in addition to a porous layer being disposed on the base element by coating, the base element itself can - at least in sections - comprise a porous surface or porous top layer being obtained during the additive manufacturing process, in other words being additively manufactured. Preferably only a surface or top layer of the base element is porous with the material below the surface or top layer being solid. In this case it is preferred that that the solid, non-porous section of the (respective) base element has a surface to volume ratio in the range of from 300 m⁻¹ to 5000 m⁻¹, preferably in the range of from 500 m-¹ to 4000 m⁻¹.

If present, the porous base layer of an adsorber coating and/or the porous top layer of a base element can comprise or consist of the sorbent material being suitable for adsorption and desorption of carbon dioxide.

Alternatively or in addition, the porous base layer and/or top layer may function as a carrier for the sorbent material. The base layer and/or top layer may for example be coated and/or impregnated with the sorbent material and/or functionalized, in particular amine-functionalized.

Amine-functionalization in particular means that a surface, for example of a base element or a base layer disposed thereon, is functionalized with amines.

The porous base layer preferably comprises or consists of silica, in particular a silica gel, a polymer, a metal, a metal-organic framework, a paint coating, or a ceramic material, which has proven as particularly suitable.

A porous top layer preferably comprises or consists of silica, in particular a silica gel, a metal-organic framework, a paint coating, or a ceramic material, which has proven as particularly suitable.

If an adsorber coating with a porous base layer is present, the porous base layer expediently extends at least over the surface region of the at least one gas flow channel. The same preferably holds for the optional porous top layer of a base element, which may also preferably extend at least over the surface region of the at least one gas flow channel.

The porous base layer and/or porous top layer, if present, can for example have pore sizes in the range of from 1 nanometer to 150 micrometers, preferably in the range of from 1 nanometer to 100 micrometers.

The adsorber coating, if present, or at least a base layer thereof, preferably is or has been applied to the base element of the at least one adsorber element by a spray coating process. Accordingly, the adsorber coating/base layer may have been obtained by spray coating. Alternatively or in addition, the adsorber coating/base layer may be or may have been applied to the base element by immersing the base element in a suitable coating bath.

It is also possible that sorbent material is wrapped around the at least one base element. As an example, filaments comprising or consisting of the sorbent material may be wrapped around the base element. The filaments can carry sorbent material. They can for example be functionalized, in particular amine-functionalized filaments.

The number of gas flow channels and/or heat fluid channels in (each) adsorber element may vary depending on operational requirements, in particular flow and pressure drop requirements.

The at least one adsorber element can for example have at least 10 gas flow channels. It is possible that the at least one adsorber element has a number of gas flow channels in the range of from 10 to 100000. The at least one adsorber element can have at least 30, preferably at least 100, particularly preferable at least 500 gas flow channels. The number of gas flow channels can for example be in the range of from 100 to 100000, particularly in the range of from 500 to 100000, preferably in the range of from 1000 to 100000. These numbers are exemplary.

Alternatively or in addition, the at least one adsorber element can for example have at least 10 heat fluid channels. It is possible that the at least one adsorber element has a number of heat fluid channels in the range of from 10 to 1000. The at least one adsorber element can have at least 30, preferably at least 100, particularly preferable at least 500 heat fluid channels. The number of heat fluid channels can be in the range of from 30 to 1000, preferably of from 100 to 1000, particularly preferable of from 500 to 1000. These numbers are exemplary.

The at least one gas flow channel and the at least one heat fluid channel expediently do not merge, in other words intersect. Accordingly, heat fluid flowing through the at least on heat fluid channel during a desorption cycle will not come into contact with a gas stream flowing through the at least one gas flow channel.

In a preferred embodiment the at least one gas flow channel has two openings lying on opposite face sides of the at least one adsorber element, and the at least one heat fluid channel has two openings lying on a side or sides of the at least one adsorber element connecting the two face sides and in particular being oriented orthogonally to the two face sides.

If the or the respective adsorber element is cylindrical, it expediently has two opposing even face sides which are connected by a cylindrical mantle. In this case, the at least one gas flow channel preferably has one opening on each of the two face sides and the at least two heat fluid channel has two openings both lying at the mantle surface. Heat fluid can then in other words be fed and discharged from the side of the at least one adsorber element while a gas stream to be treated can enter the at least one adsorber element on one face side and exit on the other, opposing face side. In other words, heat fluid can be fed and discharged from the non-gas, in particular non-air side of the adsorber element(s).

If the at least one adsorber element is cuboid, a gas to be treated may also enter and exit on opposing face sides, while the openings of the at least one heat fluid channel may be positioned on at least one of the four sides connecting the two face sides.

Expediently, the at least one adsorber element, preferably a base element thereof, has inner walls. The inner walls in particular were at least in sections, preferably completely, additively manufactured and define in other words delimit at least one gas flow channel and/or at least one heat fluid channel. It may also be that at least one inner wall defines with one side at least a section of a gas flow channel and with another, opposing side at least a section of a heat fluid channel.

Furthermore, at least two of the internal walls preferably form an internal double-wall lying between two adjacent gas flow channels. In this case a heat fluid channel may extend inside the internal double-wall.

Many different and preferably complex forms of additively manufactured adsorber elements being characterized by a high surface to volume ratio and expediently having inner walls defining channels may be used within the framework of the present invention.

It has for example proven as particularly suitable if the inner walls at least in sections are bend and/or twisted and/or complexly shaped. According to an especially preferred embodiment the inner walls at least in sections have triply periodic minimal surfaces. Alternatively or in addition the inner walls may at least in sections form a honeycomb-like structure.

The at least one gas flow channel and/or at least one inner wall defining such may be shaped organically flowing without any sharp edges or transitions.

Alternatively or in addition the inner walls at least in sections may have a sinusoidal cross section. The inner walls in other words can have a wavy course.

It may also be that at least one gas flow channel at least in sections extends over at least 90% of the entire expansion of the (respective) adsorber element or base element thereof in a direction perpendicular to a gas flow direction, preferably over the entire expansion.

It may also be that there are sections extending over at least 90% of the entire expansion of the (respective) adsorber element or base element in a direction perpendicular to a gas flow direction and sections which only extend over less than 90%, for example over less than 500 of the entire expansion of the (respective) adsorber element or base element in a direction perpendicular to a gas flow direction.

Furthermore, the diameter of the at least one gas flow channel preferably exceeds the diameter of the at least one heat fluid channel.

According to one embodiment, the diameter of the at least one gas flown channel is at least 3 times, in particular at least 5 times, preferably at least 10 times larger than the diameter of the at least one heat fluid channel. The diameter of the at least one gas flown channel can for example be 3 to 20 times, in particular 5 to 20 times, preferably 10 to 20 times larger than the diameter of the at least one heat fluid channel. If the diameter of the at least one gas flow channel and/or the diameter of the at least one heat fluid channel varies along the expansion of the respective channel in flow direction, the maximum diameters can have a ratio in the above ranges.

The diameter of the at least one gas flow channel can for example amount to at least 0,5 mm. Alternatively or in addition, the diameter of the at least one gas fluid channel can for example amount to at least 0,2 mm.

If there are more than one gas flow channels and/or more than one heat fluid channels, the diameter of the or all gas flow channel(s) preferably exceeds the diameter of the or all heat fluid channel(s).

Another preferred embodiment is characterized in that the diameter of the at least one gas flow channel exceeds the thickness of at least one inner wall defining the at least one gas flow channel at least in sections. In particular, the dimeter is at least three times, preferably at least five times as large as the thickness. It may be that all inner walls of an adsorber element have the same constant thickness. In this case, the diameter of all gas flow channels preferably exceeds the thickness of the inner walls.

The at least one adsorber element, preferably a base element thereof, may comprise at least one outer wall. At least one inner wall may extend within a space defined, in other words delimited, by the at least one outer wall.

If a holding structure for the at least one adsorber element is present, the holding structure may comprise conduits for feeding a heat fluid to the internal heat fluid channel(s).

Subject of the present invention also is a method for manufacturing an adsorber structure according to the present invention, the method comprising:
- additively manufacturing a base element comprising at least one gas flow channel and at least one heat fluid channel,
- optionally providing a base layer on at least sections of the surface of the at least one base element, preferably by coating, and
- providing a sorbent material on the surface of the at least one base element or the base layer, the sorbent material allowing for adsorption and desorption of carbon dioxide, preferably, wherein providing the sorbent material includes performing a functionalization treatment, in particular an amine-functionalization treatment.

The step of additively manufacturing may comprise that the base element is additively manufactured such that it has a porous top layer.

The step of providing the sorbent material may include providing an adsorber coating on the surface of the at least one base element, preferably by a spray coating process and/or by an immersion bath coating process.

The at least one base element preferably is coated with polymers and/or silica, in particular silica gel, and/or zeolites and/or metal and/or a metal-organic framework and/or a paint coating and/or a ceramic material, preferably by use of a spray coating process and/or such, that a porous character of the base layer is obtained, and the coated base element undergoes an amine functionalization treatment.

The invention also provides a device for capturing carbon dioxide, in particular for direct air capture of carbon dioxide, comprising at least one adsorber structure according to the present invention. The device preferably comprises a chamber, in particular vacuum chamber, with a preferably closable gas inlet and a preferably closable gas outlet, the at least one adsorber structure being disposed within the chamber. The device may also comprise a vacuum system by means of which the pressure within the chamber may be reduced, in particular for the desorption/debonding process for removing captured carbon dioxide from the adsorber structure. Preferably, the vacuum system and chamber are embodied such that a pressure in the range of from 1 Pascal to 1000 Pascal can be obtained within the chamber.

The invention furthermore regards the use of an adsorber structure or a device according to the present invention for capturing carbon dioxide, in particular for direct air capture of carbon dioxide.

Furthermore, the invention provides a method for capturing carbon dioxide comprising:
- providing a device according to the invention comprising an adsorber structure according to the invention,
- during an absorption cycle feeding a gas stream to be treated to the chamber, the gas stream coming into contact with the adsorber structure,
- during a subsequent desorption cycle indirectly heating the adsorber structure using the at least one internal heat fluid channel provided in the at least one adsorber element, in particular, wherein the pressure in the chamber is reduced during the desorption cycle, preferably to a pressure in the range of from 1 Pascal to 1000 Pascal.

The method for capturing carbon dioxide may comprise many iterations of alternating absorption and desorption cycles. A vacuum system of the device may be used for reducing the pressure during the desorption process.

Further advantages and features of the present invention will become apparent from the following description with reference to the accompanying drawing. Therein
- Figure 1: is a purely schematic perspective partial view of an exemplary embodiment of a device for capturing carbon dioxide, in particular for direct air capture, according to the present invention, comprising a vacuum chamber and an adsorber structure disposed therein,
- Figure 2: is a purely schematic sectional view of the device of figure 1 showing the adsorber structure,
- Figure 3: is a schematic perspective partial view of a first exemplary embodiment of an adsorber structure according to the present invention,
- Figure 4: is an enlarged partial view from figure 3, showing the gas flow channels and heat fluid channels;
- Figure 5: is a schematic partial side view of a second exemplary embodiment of an adsorber structure according to the invention; and
- Figure 6: is another schematic partial view of the adsorber structure shown in figure 6.

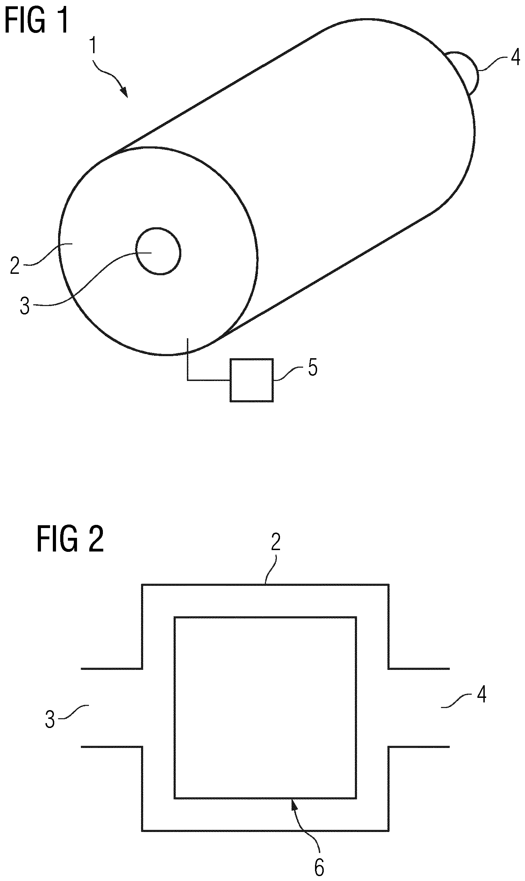

Figure 1 shows a purely schematic perspective partial view and figure 2 a purely schematic sectional partial view of an exemplary embodiment of a device 1 for capturing carbon dioxide from a gas stream, in particular for direct air capture, according to the present invention. The device 1 comprises a vacuum chamber 2 with a closable gas inlet 2 and closable gas outlet 4, the in- and outlet 3, 4 being disposed on opposite face sides of the vacuum chamber 2. The device 1 furthermore comprises a vacuum system 5 by means of which the pressure within the vacuum chamber 2 may be reduced. The vacuum system 5 in particular comprises at least one pump for evacuating the chamber 2, i.e. removing gas from within the chamber 2.

An adsorber structure 6 is disposed within the vacuum chamber 2. Since the vacuum chamber 2 surrounds the adsorber structure 6, the latter is not visible in figure 1.

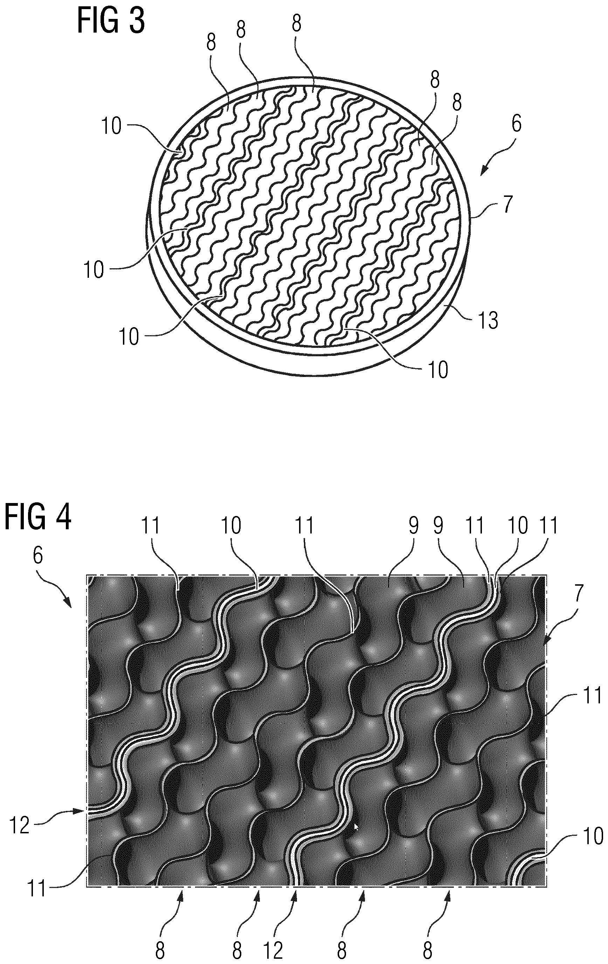

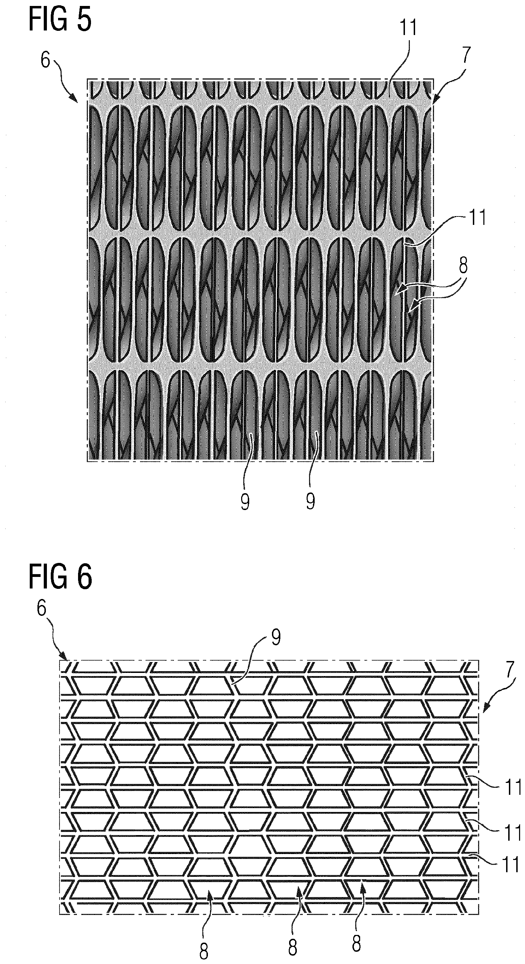

Figures 3 and 4 show views of a first exemplary embodiment of an adsorber structure 6 according to the present invention and figures 5 and 6 views of a second exemplary embodiment. The adsorber structure 6 disposed within the vacuum chamber 2 shown in figure 2 may for example be embodied as shown either in figures 3 and 4 or as shown in figures 5 and 6. It has to be noted that the sectional view of purely schematic figure 2 does not shown any internal elements of the adsorber structure 6, but only indicates the structure's 6 outer contour.

The adsorber structure 6 comprises or consist of at least one adsorber element 7, the at least one adsorber element having at least in sections been additively manufactured. The at least one adsorber element 7 comprises at least one internal gas flow channel 8 for a gas stream to be treated and a sorbent material 9 allowing for adsorption and desorption of carbon dioxide and at least one internal heat fluid channel 10 for indirect heating of the sorbent material.

In the examples shown in figures 3 and 5 as well as figures 6 and 7, the adsorber structure 6 comprises only one adsorber element 7 having a circular circumference (see figure 3). Nevertheless, this is to be understood as exemplary and an adsorber structure 6 according to the invention may also comprise two or more adsorber elements 6 which may also have a circumference of other form.

The adsorber element 7 comprises an additively manufactured base element (not separately shown) made of metal, ceramic or at least one polymer. The base element, which as a whole has been additively manufactured, has a surface to volume ratio in the range of from 300 m⁻¹ to 5000 m⁻¹, preferably in the range of from 500 m⁻¹ to 4000 m⁻¹.

An adsorber coating is disposed at least on sections of the base element, the adsorber coating comprising or consisting of the sorbent material 9. The adsorber coating may comprise or consist of a preferably porous base layer which in particular has undergone a functionalization treatment, preferably an amine-functionalization treatment.

If should be noted that it is also possible that the base element has a porous surface or top layer (not shown), which may also have been obtained within the additive manufacturing procedure. Below the porous surface or top layer, the base element expediently is solid, i.e. non-porous. If the base element has a porous top layer, the solid section of the base element extending below the porous surface or top layer preferably is characterized by a surface to volume ratio in the above named range of from 300 m⁻¹ to 5000 m⁻¹, preferably in the range of from 500 m⁻¹ to 4000 m⁻¹.

A base layer of the adsorber coating, if present, may comprise or consist of silica, in particular a silica gel, or a ceramic material or a polymer material. The adsorber coating, in particular a base layer thereof may have been obtained by spray coating the base element and/or by immersing the base element in a coating bath.

A porous top layer of the base element and/or porous base layer of an adsorber coating may further contribute to a high surface to volume ration. Also, a porous top layer in particular may assist the bonding of a coating, in particular a base layer of an adsorber coating.

Both exemplary embodiments of adsorber structures 6 comprise an adsorber element 7 with several gas flow channels 8. The adsorber element 7 may for example have at least 10, in particular at least 30, preferably at least 100, particularly preferable at least 500 gas flow channels 8.

Alternatively or in addition the adsorber element 7 may have at least 10, in particular at least 30, preferably at least 100, particularly preferable at least 500 heat fluid channels 10.

As can be seen in figures 3 and 4, the gas flow channels 8 and heat fluid channels 10 do not merge. In other words, they do not intersect. Accordingly, heat fluid flowing through the heat fluid channels 10 will not come into contact with a gas stream flowing through the gas flow channels 8 when the adsorber structure 6 is used as intended. Separate media routing of gas and heat is obtained.

The gas flow channels 8 each have two openings lying on opposite face sides of the adsorber element 7. In figure 3, the two face sides of the adsorber element 6 point upward and downward, respectively. The heat fluid channels 10 on the other hand have two openings lying opposite each other on the cylindrical mantle side of the cylindrical adsorber element 7 which connects the two face sides. Accordingly, heat fluid ca be fed and discharged from the non-gas, in particular non-air side of the adsorber element 7.

It is to be noted that while the adsorber elements 7 of both exemplary embodiments comprise heat fluid channels 10, such can only be seen in figures 3 and 4 but not in schematic figures 5 and 6.

As can be seen in figures 3 to 6, the adsorber elements 7 of both embodiments have inner walls 11. The inner walls 11 were additively manufactured, in detail obtained when the base element was additively manufactured, for example 3D-printed or produced by selective laser melting or the like.

The inner walls 11 define in other words delimit the gas flow channels 8 and the heat fluid channels 10. Some of the inner walls 11 define with one side at least a section of a gas flow channel 8 and with another, opposing side at least a section of a heat fluid channel 10.

Furthermore, there are pairs of two internal walls 11 forming an internal double-wall 12 lying between two adjacent gas flow channels 8, respectively. A heat fluid channel 10 is defined inside the internal double-wall 12, in other words extends therein.

The inner walls 11 are of complex shape, defining a net or grid of complexly formed gas flow channels 8 and heat fluid channels 10. The inner walls 11 are at least in sections bend and/or twisted and/or complexly shaped.

The inner walls 11 of the first embodiment according to figures 3 and 4 are organically flowing without any sharp edges or transitions, thereby defining complexly shaped, organically flowing gas flow channels 8 without any sharp edges or transitions and sinusoidal heat fluid channels 10. It should be noted that the gas flow channels 8 and inner walls 11 are shown in more detail in the enlarged view of figure 4. The sinusoidal heat fluid channels 10 each are defined by a double-wall 12 of sinusoidal course. All inner walls 11 of the embodiment according to figures 3 and 4 in sections have sinusoidal cross sections, which again is to be understood as exemplary.

Furthermore, the inner walls 11 at least in sections preferably have triply periodic minimal surfaces.

Alternatively or in addition, the inner walls 11 form a honeycomb-like structure as is the case for the second exemplary embodiment (compare figure 6). In the second embodiment, the inner walls 11 in sections have the shape of twisted ribbons, as can be seen in figure 5.

The inner walls 11 lie within the space defined by cylindrical outer wall 13 of the base element.

The inner walls 11 may have round, in particular circular and/or elliptical, openings.

The diameter of the gas flow channels 8 exceeds the thickness of the inner walls 11 many times over. Also, the diameter of the gas flow channels 8 exceeds the diameter of the heat fluid channels 10.

The complex inner structure of the respective adsorber elements 7 obtained via additive manufacturing facilitates a high surface to volume ratio of the respective adsorber element 7 and thereby a comparably large contact surface for gas to be treated and high CO₂ capture rate.

It is emphasized that the complex shape of the adsorber elements 7 according to figures 3 to 6 are purely exemplary and any other complex shapes providing a high surface to volume ratio may be equally suitable.

In addition to one or more adsorber elements 7, the adsorber structure 6 according to the invention may comprise a holding structure (not shown) for holding the adsorber element(s) 7 in suitable manner in particular within a vacuum chamber 2. A holding structure may comprise conduits for feeding a heat fluid to the internal heat fluid channels 10.

For manufacturing the adsorber elements 7, a base element with gas flow channels 8 and heat fluid channels 10 as shown in figures 3 and 4 or figures 5 and 6 respectively, was first produced by use of an additive manufacturing procedure, for example 3D-printing, selective laser melting or the like. Preferably, the base element was additively manufactured such that is has a porous surface, in particular top layer, at least in the region of the gas flow channels 8.

In a next step, the base layer, preferably consisting of at least one polymer, silica gel or zeolites and/or having a porous character, was provided on the surface of the base element, preferably by spray coating the base element or by immersing it in an immersion bath. The coating itself can capture CO₂ or it undergoes a functionalization treatment. In the shown examples, the coated base element preferably underwent an amine functionalization treatment enabling it for CO₂ capture.

The device 1 shown in figures 1 and 2 comprising the vacuum chamber 2 and adsorber structure 3 is an exemplary embodiment of device for capturing carbon dioxide according to the present invention.

The following method for capturing carbon dioxide from a gas stream, in particular an atmospheric air stream, can be performed with the device 1.

A gas stream to be treated, for example atmospheric air, is fed into the vacuum chamber 2 through inlet 3. The gas stream flows over or rather through the adsorber structure 6 comprising the adsorber element 7 and carbon dioxide is absorbed. The treated gas stream leaves the chamber 2 through outlet 4 with an at least reduced amount of carbon dioxide.

During a subsequent desorption/debonding process, the captured carbon dioxide is removed from the sorbent material 9.

The desorption process can be thermally or electrically assisted. For thermal assistance, a heat fluid will be fed to the internal heat fluid channels 10. In other words, indirect heating of the adsorber elements 6 may be performed by use of integrated heat fluid channels. If holding structure is present, it may comprise conduits for feeding of a heat fluid to the internal heat fluid channels of the adsorber elements 7.

No gas to be treated is fed to vacuum chamber 2 during the desorption process. Gas inlet 3 and gas outlet 4 are closed. The vacuum system 5 is used to obtain a vacuum within the chamber 2 for the desorption process. Preferably, a pressure in the range of from 1 Pascal to 1000 Pascal is obtained.

The method for capturing carbon dioxide may comprise many iterations of alternating absorption and desorption cycles.

Although the present invention has been described in detail with reference to the preferred embodiment, it is to be understood that the present invention is not limited by the disclosed examples, and that numerous additional modifications and variations could be made thereto by a person skilled in the art without departing from the scope of the invention.

Regardless of the grammatical gender of a particular term, persons with male, female, or other gender identity are included.

## Claims

1. Adsorber structure (6) for capturing carbon dioxide, in particular for direct air capture of carbon dioxide,
**characterized in that**
the adsorber structure (6) comprises or consist of at least one adsorber element (7), the at least one adsorber element (7) having at least in sections been additively manufactured, wherein the at least one adsorber element (7) comprises at least one internal gas flow channel (8) for a gas stream to be treated and a sorbent material (9) allowing for adsorption and desorption of carbon dioxide and at least one internal heat fluid channel (10) for indirect heating of the sorbent material (9).

2. Adsorber structure (6) according to claim 1,
the at least one adsorber element (7) comprises an additively manufactured base element, preferably, wherein the base element has a surface to volume ratio in the range of from 300 m⁻¹ to 5000 m⁻¹, preferably in the range of from 500 m⁻¹ to 4000 m⁻¹

3. Adsorber structure (6) according to claim 2,
**characterized in that**
an adsorber coating is disposed at least on sections of the base element, the adsorber coating comprising or consisting of the sorbent material (9).

4. Adsorber structure (6) according to claim 3,
**characterized in that**
the adsorber coating comprises or consists of a preferably porous base layer which in particular has undergone a functionalization treatment, preferably an amine-functionalization treatment.

5. Adsorber structure (6) according to claim 4, **characterized in that**
the base layer comprises or consists of silica, in particular a silica gel, a polymer, a metal, a metal-organic framework, a paint coating, or a ceramic material and/or **in that** the base layer was obtained by spray coating the base element and/or by immersing the base element in a coating bath.

6. Adsorber structure (6) according to any of the preceding claims,
**characterized in that**
the at least one adsorber element (7) has at least 10, in particular at least 30, preferably at least 100, particularly preferable at least 500 gas flow channels (8), and/or **in that** the at least one adsorber element (7) has at least 10, in particular at least 30, preferably at least 100, particularly preferable at least 500 heat fluid (10) channels.

7. Adsorber structure (6) according to any of the preceding claims,
**characterized in that**
the at least one gas flow channel (8) and the at least one heat fluid channel (10) do not merge.

8. Adsorber structure (6) according to any of the preceding claims,
**characterized in that**
the at least one gas flow channel (10) has two openings lying on opposite face sides of the at least one adsorber element (7), and the at least one heat fluid channel (10) has two openings lying on a side or sides of the at least one adsorber element (7) connecting the two face sides and in particular being oriented orthogonally to the two face sides.

9. Adsorber structure (6) according to any of the preceding claims,
**characterized in that**
the at least one adsorber element (7) has inner walls (11), in particular, wherein the inner walls (11) were at least in sections additively manufactured and define the at least one gas flow channel (8) and/or the at least one heat fluid channel (10), preferably, wherein at least one inner wall (11) defines with one side at least a section of a gas flow channel (8) and with another, opposing side at least a section of a heat fluid channel (10).

10. Adsorber structure (6) according to claim 9,
**characterized in that**
that at least two of the internal walls (11) form an internal double-wall (12) lying between two adjacent gas flow channels (8), a heat fluid channel (10) extending inside the internal double-wall (12).

11. Adsorber structure (6) according to claim 9 or 10,
**characterized in that**
the inner walls (11) at least in sections are bend and/or twisted and/or complexly shaped and/or have triply periodic minimal surfaces and/or at least in sections form a honeycomb-like structure and/or at least in sections have a sinusoidal cross section.

12. Method for manufacturing an adsorber structure (6) according to any of claims 1 to 11, comprising:
- additively manufacturing a base element comprising at least one gas flow channel (8) and at least one heat fluid channel (10),
- optionally providing a base layer on at least sections of the surface of the at least one base element, preferably by coating, and
- providing a sorbent material on the surface of the at least one base element or the base layer, the sorbent material allowing for adsorption and desorption of carbon dioxide, preferably, wherein providing the sorbent material includes performing a functionalization treatment, in particular an amine-functionalization treatment.

13. Method according to claim 12,
**characterized in that**
providing the sorbent material includes providing an adsorber coating on the surface of the at least one base element, preferably by a spray coating process and/or by an immersion bath coating process.

14. Device (1) for capturing carbon dioxide, in particular for direct air capture of carbon dioxide, comprising at least one adsorber structure (6) according to any of claims 1 to 11, preferably, wherein the device comprises a chamber (2) with a gas inlet (3) and gas outlet (4), the at least one adsorber structure (6) being disposed within the chamber (2).

15. Use of an adsorber structure (6) according to any of claims 1 to 11 or of a device (1) according to claim 15 for capturing carbon dioxide, in particular for direct air capture of carbon dioxide.

16. Method for capturing carbon dioxide comprising:
- providing a device (1) according to claim 14,
- during an absorption cycle feeding a gas stream to be treated to the chamber (2), the gas stream coming into contact with the adsorber structure (6),
- during a subsequent desorption cycle indirectly heating the adsorber structure (6) using the at least one internal heat fluid channel (10) provided in the at least one adsorber element (7), in particular, wherein the pressure in the chamber (2) is reduced during the desorption cycle, preferably to a pressure in the range of from 1 Pascal to 1000 Pascal.
